(19) Europäisches Patentamt
European Patent Office
Office européen des brevets

(11) EP 4 513 703 A1

(12) EUROPEAN PATENT APPLICATION

(43) Date of publication:
26.02.2025 Bulletin 2025/09

(51) International Patent Classification (IPC):
H02J 3/32 (2006.01)   H02J 9/06 (2006.01)
H02J 1/10 (2006.01)

(21) Application number: 24196239.8

(22) Date of filing: 23.08.2024

(52) Cooperative Patent Classification (CPC):
H02J 9/061; H02J 1/106; H02J 3/32

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023  US 202363534728 P
06.03.2024  US 202463562137 P

(71) Applicant: Flex Ltd.
486123 Singapore (SG)

(72) Inventors:
• NOVAK, James P.
Austin, Texas, 78759 (US)
• CHUNG, Yi Yuan
486123 Singapore (SG)
• TIKHONSKI, Alexei
Austin, Texas, 78759 (US)

• NELSON, James E.
486123 Singapore (SG)
• RAZ, Guy
486123 Singapore (SG)
• PAVLOVSKY, Igor
486123 Singapore (SG)
• MYERS, Robert L.
Austin, Texas, 78726 (US)
• WANG, Guanshiun
486123 Singapore (SG)
• CHUNG, Pei Chiao
486123 Singapore (SG)
• TSANG, Deng Yu
486123 Singapore (SG)

(74) Representative: Meissner Bolte Partnerschaft
mbB
Patentanwälte Rechtsanwälte
Postfach 86 06 24
81633 München (DE)

(54) POWER SYSTEMS AND CONTROL METHODS TO ADDRESS PEAK LOADING

(57) A power system comprises an energy storage system including a rechargeable energy storage element and a converter connected to the rechargeable energy storage element and configured to connect to a bus so that the energy storage system is connected in parallel with a load and a main power supply system. The energy storage system cooperates with the main power supply system to supply power to the load. The power system may include a control circuit configured to monitor a voltage of the bus and control the converter to either charge or discharge the rechargeable energy storage element based on the voltage of the bus. The control circuit may also monitor a status of a state of charge (SOC) of the rechargeable energy storage element and a system load condition.

Fig. 2

EP 4 513 703 A1

**Description**

CROSS REFERENCE TO RELATED APPCLIATIONS

This application claims priority to US Provisional Application Nos. 63/534,728, filed on August 25, 2023, and 63/562,137, filed on March 6, 2024, the disclosures of which are hereby incorporated by reference, in their entirety, for all that they teach and for all purposes.

FIELD

The present disclosure is generally directed to power systems and control methods to address peak loading, for example, in installations with unstable energy sources and/or high dynamic loads.

BACKGROUND

Electrically powered devices are requiring ever increasing energy demands to maintain function. This creates issues where electrical demand runs close to the maximum architectural supply limits and external line input power supply cannot keep up with dynamic demands. There are two major components comprising the electrical systems used in high dynamic loading environments, the energy or power source and the load. Each of these components include many different types, and it is important to balance the total amount of available power from the power source and total power required by the load to avoid bus voltage sway or sag phenomenon that cause a protection event or even equipment damage at both sides.

BRIEF DESCRIPTION OF THE DRAWINGS

Fig. 1 illustrates a block diagram of a related art power system.
Fig. 2 illustrates a block diagram of a power system according to at least one example embodiment.
Fig. 3 illustrates a power system that comprises two unidirectional DC/DC converters according to at least one example embodiment.
Fig. 4 illustrates a power system that comprises a bi-directional DC/DC converter according to at least one example embodiment.
Fig. 5 illustrates a power system that comprises multiple interleaved bidirectional DC/DC converters with phases 1 to N according to at least one example embodiment.
Fig. 6 illustrates an example of a single capacitor Direct Current Internal Resistance (DCIR) voltage drop resulting from load current, occurring within a single capacitor contained within a series/parallel connected capacitor based energy storage element according to at least one example embodiment.
Fig. 7 illustrates a parallel type of storage system having a Capacitive Energy Storage System (CESS) configured as a voltage source with a current source type of main power supply system according to at least one example embodiment.
Fig. 8 illustrates an output characteristic of a main power supply system controlled as a current source according to at least one example embodiment.
Fig. 9 illustrates a bidirectional output characteristic of a Capacitive Energy Storage System (CESS) controlled as a voltage source with droop function according to at least one example embodiment.
Fig. 10 illustrates a block diagram of a control system for a Power Converter with a CESS to achieve bidirectional charge/discharge behavior according to at least one example embodiment.
Fig. 11 illustrates the fast and smooth charge and discharge transition using the control mechanism of Fig. 10 according to at least one example embodiment.
Fig. 12 illustrates a block diagram of a control system for keeping a CESS away from break point(s) according to at least one example embodiment.
Figs. 13A-13C are waveform comparisons of a power system with and without a CESS element according to at least one example embodiment.
Fig. 14 illustrates waveforms for a CESS power stage and main power stage during load step-up and load step-down conditions according to at least one example embodiment.

DETAILED DESCRIPTION

Smoothly balancing the total amount of available power from the source and total power required by the load is now easily affected by the unpredictable characteristics of new technologies such as renewable energy source(s) or the high dynamic load demands of Artificial Intelligence (AI) computation workloads in a computer data center. In the situation of high dynamic loads required by AI workloads and their synchronous nature acting at the single server rack level are magnified by the number of server racks in a data center. In these cases the entire data center power consumption ramps up and down in power faster than the utility is capable of responding, and the potential exists for voltage sags and frequency shifts at the utility level and the tripping of overcurrent protection devices within the data center itself.

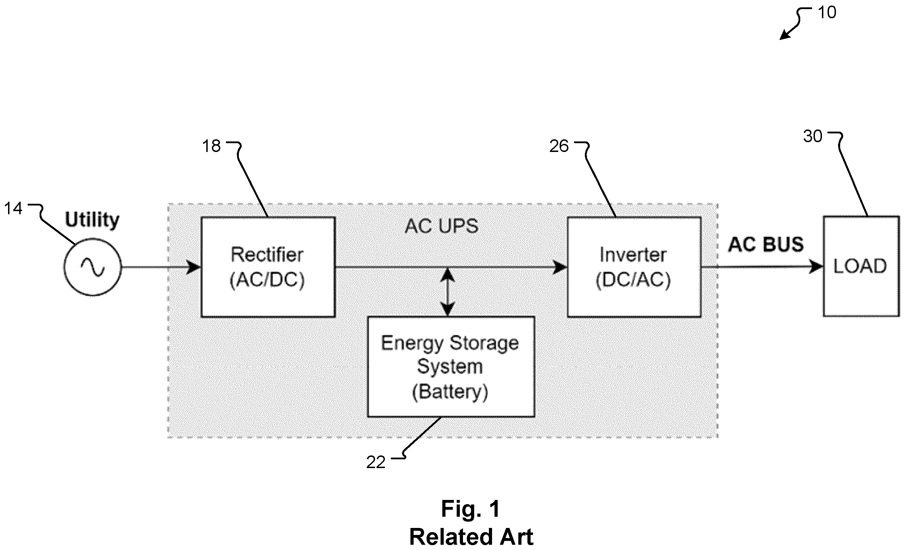

In related art installations, it is common for users to install alternating current uninterruptable power supply (AC UPS) systems as a buffer stage between energy source or utility 14 and a load 30, as shown in Fig. 1 with system 10 that also includes a rectifier 18, an energy storage system 22, and inverter 26. There are energy storage components inside the energy storage system 22, such as different kinds of batteries. When the dynamic load requirement of load 30 is larger than the energy source's 14 capacity, the energy storage component 22 in the UPS will start to discharge, and conversely, will start to charge when the load peak dissipates and load drops below the level where the energy source 14 has available capacity. Because the energy storage system 22 is cascaded in the power delivery path between utility 14 and the load 30, the AC UPS system 10 lacks flexibility and redundancy.

Advantages of embodiments of the present disclosure include at least the following: mitigating the unbalanced phenomenon at the amount of input/output power between energy source and load requirement; improved scalability and flexibility compared to an AC UPS; improved current control ability of a direct current (DC) UPS system; extremely high cycle counts; and fast recharge times (Return to Ready).

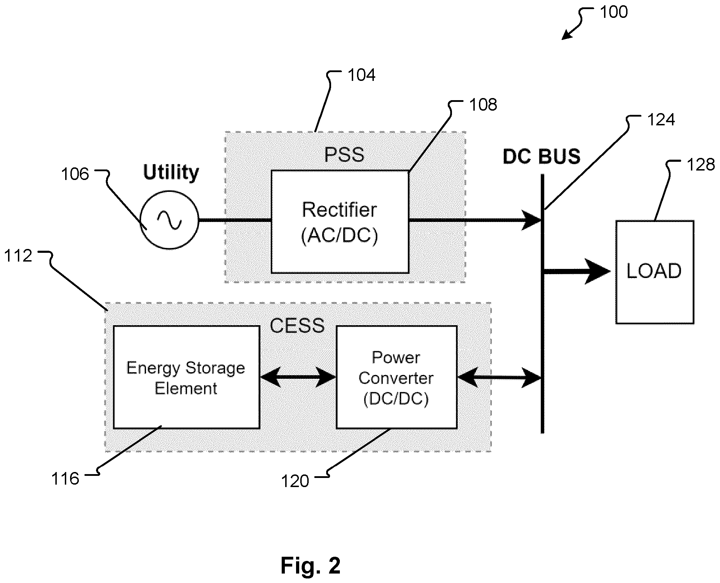

Fig. 2 illustrates a power system 100 according to at least one example embodiment. The system 100 includes a main power supply system 104 (also called a "PSS" and "PSU" herein) that includes a power source 106 (e.g., a utility) and a rectifying component 108, a Capacitive Energy Storage System (CESS) 112 that includes a rechargeable capacitive energy storage element 116 (also called an "ESS" herein), and a converter 120 (e.g., a DC/DC converter). The PSS 104 and CESS 112 are connected in parallel to a load 128 through an appropriate high current power bus 124.

A DC UPS application with similar composing elements as 112 in the proposed system 100 offers greater reliability and efficiency compared to traditional AC UPS systems and has been widely adopted in data centers to manage backup functions during AC utility outages. The CESS 112 in the proposed system 100, in addition, offers advantages over typical DC UPS systems that employ batteries as the energy storage system, such as lithium batteries, which are recognized for their high energy density and effectiveness in backup applications. However, batteries have a limited cycle life (typically under 1,000 cycles) and asymmetric charge/discharge performance (with a deviation of up to 20 times between charging and discharging current capabilities) which makes batteries unsuitable for the rapid and frequent charge/discharge demands of AI workloads. This type of application can be referred to as having a power filtering requirement. Additionally, there are neither dedicated control algorithms nor symmetrical power delivery converters specifically designed for power filtering applications. As shown in Fig. 2, example embodiments propose using capacitive rechargeable energy storage elements and introduce new control mechanisms to effectively manage power filtering for the illustrated CESS 112. The system 100 can be used to deliver power to loads 128 when system demand increases at a faster rate than the utility 106 is capable of responding.

The Energy Storage Element 116 may include a capacitive source such as a series and parallel connection of capacitors (e.g., multiple groups of capacitors with capacitors in each group being connected in parallel and with each group being connected in series). The capacitors within the Energy Storage Element 116 may comprise rechargeable lithium ion-based capacitors and/or electric double layer (EDL) supercapacitors, which provide the advantage of the high cycle life of a capacitor (millions of cycles), high terminal voltage (2.6 - 3.8V), high volumetric energy density (26Wh/l) and extraordinary bi-directional power density (15kW/l). EDL capacitors and lithium ion capacitors are particularly well suited for use in systems with very high power, fast dynamic load requirements and continuous cycling. The terms capacitor, supercapacitor, ultracapacitor, electric double layer capacitor (EDLC), electric double layer (EDL) capacitor, EDL Supercapacitor, etc. are used interchangeably to describe a rechargeable charge storage element. To those skilled in the art, there are technical differences related to the energy delivery performance, operating voltage and energy storage capacity between these charge storage elements. As may be appreciated, the series and parallel configuration of lithium capacitors or EDL (Electric Double Layer) supercapacitors is configured to meet the stored energy requirements of the application and also to meet the DCIR (DC Internal Resistance) limitations imposed by the input voltage range of the DC-DC converter(s) used when the current through the capacitor is at its maximum level. In addition, capacitors have symmetrical charge and discharge characteristics, meaning a capacitor can be charged just as fast as it is discharged.

In some examples, the Energy Storage Element 116 may additionally or alternatively comprises batteries. However, the advantage of a capacitor-based power source is threefold: the ability to charge and discharge for millions of cycles, relatively high-power output capability, and the ability to charge and discharge at equal rates. Regardless of the exact composition of the Energy Storage Element 116, the Energy Storage Element 116 has high power density, small size, and exceptionally high cycle life to meet technical requirements of the application.

As described in more detail herein, a CESS 112 is proposed to address the imbalance between the input/output power of the energy source and the load requirements. The system comprises a capacitive energy storage element, control circuit(s), and power flow control methods for DC-DC converters.

Embodiments of the present disclosure include the use of lithium capacitors or EDL supercapacitors as the Energy Storage Element 116 in a high power, high density energy delivery system (referred to as a CESS 112 herein) along with control algorithms and architectures for seamless transition as power supplies or utility line-inputs reach power output or transient power limits.

Although not explicitly shown, it should be appreciated that the system 100 may comprise additional hardware and software used for controlling PSS 104 and CESS 112, such as components for measuring current and voltage at different points within the system (e.g., voltage and current of ESS 116, voltage and current on bus 124, voltage and current of PSS 104, etc.

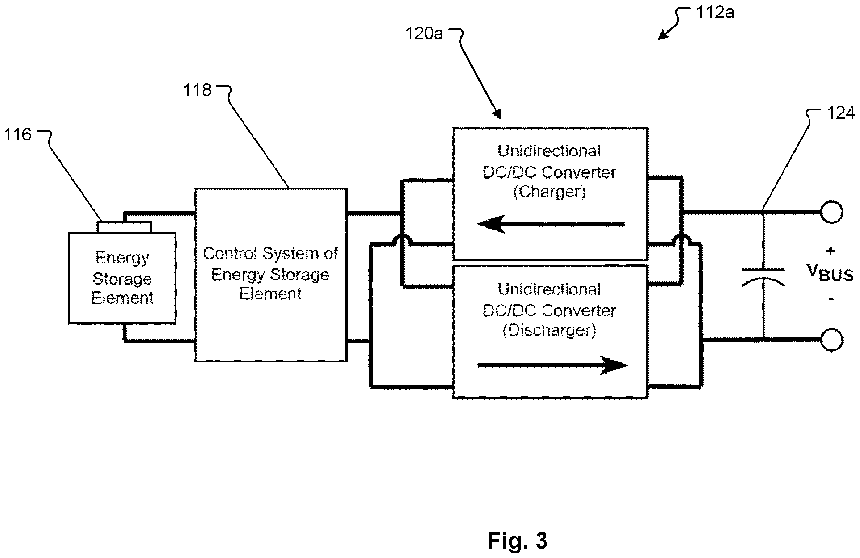

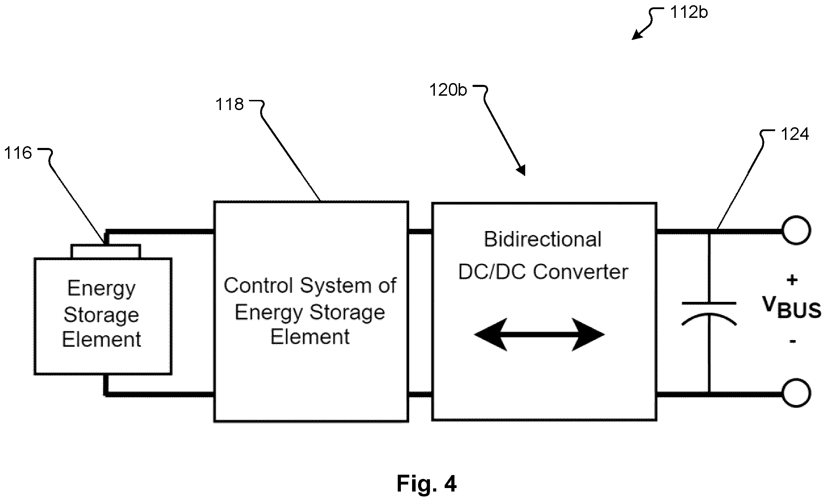

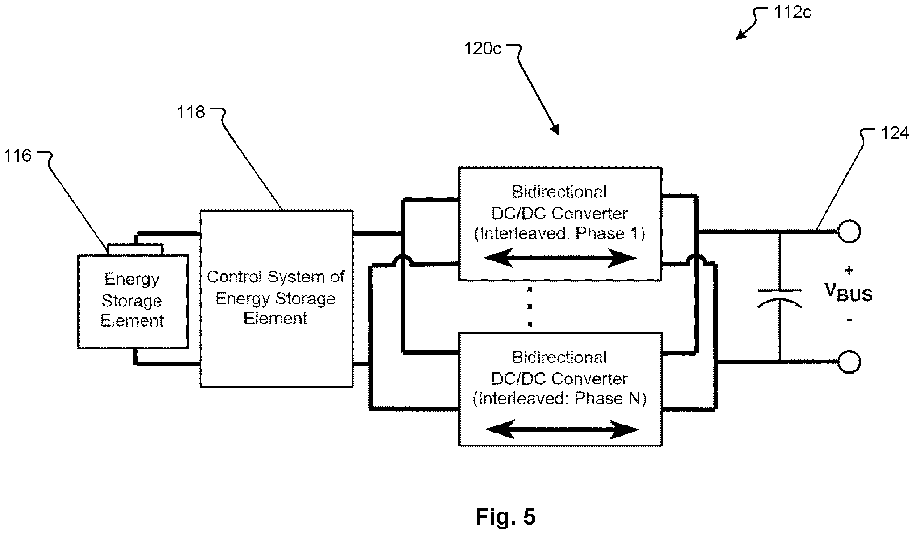

The CESS 112 may have one of the architectures illustrated in Figs. 3, 4, and 5 as CESSs 112a, 112b, and 112c, respectively. As may be appreciated, the Energy Storage Element 116 shown in Figs. 3-5 may include a series and parallel configuration of lithium capacitors or EDL supercapacitors configured to meet the stored energy requirements of the application and also to meet the DCIR limitations imposed by the input voltage range of the DC-DC converter(s) used when the current through the capacitor is at its maximum level. As may be further appreciated, each CESS 112a to 112c illustrates a different configuration for converter 120. In more detail, Fig. 3 illustrates a CESS 112a with a converter 120a that comprises two unidirectional DC/DC converters - one converter for discharging the Energy Storage Element 116 and one converter for charging the Energy Storage Element 116. Fig. 4 illustrates a CESS 112b with a converter 120b that comprises a single bi-directional DC/DC converter. Finally, Fig. 5 illustrates a CESS 112c with a converter 120c comprised of multiple interleaved bidirectional DC/DC converters with phases 1 to N. As may be appreciated, Figs. 3-5 further illustrate a control system 118 for controlling the Energy Storage Element 116 and/or converters 120a-120c. Aspects of the control system 118 and its functions are described in more detail below. In general, however, the control system 118 may comprise processing and/or driving capabilities.

As noted herein, systems and methods according to example embodiments solve various problems including but not limited to: the unbalanced phenomenon between the amount of input/output power between energy source and load requirement; low scalability and flexibility; vulnerable current control ability; low cycle counts of energy storage devices, and slow recharge times of energy storage devices.

Example embodiments are discussed in more detail below with reference to three parts: 1) the Capacitive Energy Storage Element electrical architecture, which explains the voltage range of an individual capacitor and capacitor matrix as well as some important characteristics; 2) the control system for the Energy Storage Element 116; and 3) the control scheme for a bidirectional DC-DC converter and the primary goals of the proposed application.

## 1. ESS Electrical Architecture

The Energy Storage Element 116 is designed to have a voltage that matches the DC-DC converter 120 input. For example, the converter 120 may be a DC boost circuit with an output of 48V and an input range of 30V to 46V. The ranges may cover a higher or lower voltage at the expense of reduced efficiency. The individual capacitors of the Energy Storage Element 116 can be combined such that the sum of the voltage operating range of the series capacitors matches and is centered within the DC converter input range. For example, a lithium capacitor may be charged to 3.8V. An array of 12 such lithium capacitors electrically connected in series would give a maximum voltage of 45.6V when fully charged to 3.8V each, which is at the upper voltage limit of each capacitor but still within the range of 30V-46V of the above example of DC-DC (boost) converter 120.

Capacitors of the Energy Storage Element 116 can be combined in parallel to increase the total energy of the Energy Storage Element 116. The capacitors may be characterized by the number of Joules of energy available to the system. Increasing the total energy by paralleling individual capacitors before connecting the paralleled elements in series will increase available energy. The total energy storage in Joules of such a series and parallel configuration of capacitors, each with a capacitance value of $C_{element}$ is represented in Equation 1 below.

$$Energy\ total = \frac{1}{2} * \left[\frac{Celement * P}{S}\right] * \left[(Vmax * S)^2 - (Vmin * S)^2\right]$$

Equation 1 - Equation for calculating the sum of all energy storge elements in Joules, where P is the number of parallel capacitors, and S is the number of series connected paralleled capacitor blocks, operating between maximum charge voltage ($V_{max}$) and a minimum discharge voltage ($V_{min}$).

In some examples, the total energy in Joules of the system may also be improved by a combination of a plurality of series and/or parallel connection of capacitors with a plurality of series and/or parallel connection of batteries. In this case, the voltage of the plurality of capacitors is held higher than the voltage of the plurality of batteries such that the capacitors will discharge before the batteries thus reducing the frequency and depth of discharge of the batteries in the system. The batteries can be used to maintain system voltage as capacitors are nearing energy depletion, which may extend discharge time. In this case, the batteries have minimal depth of discharge that extends cycle lifetime.

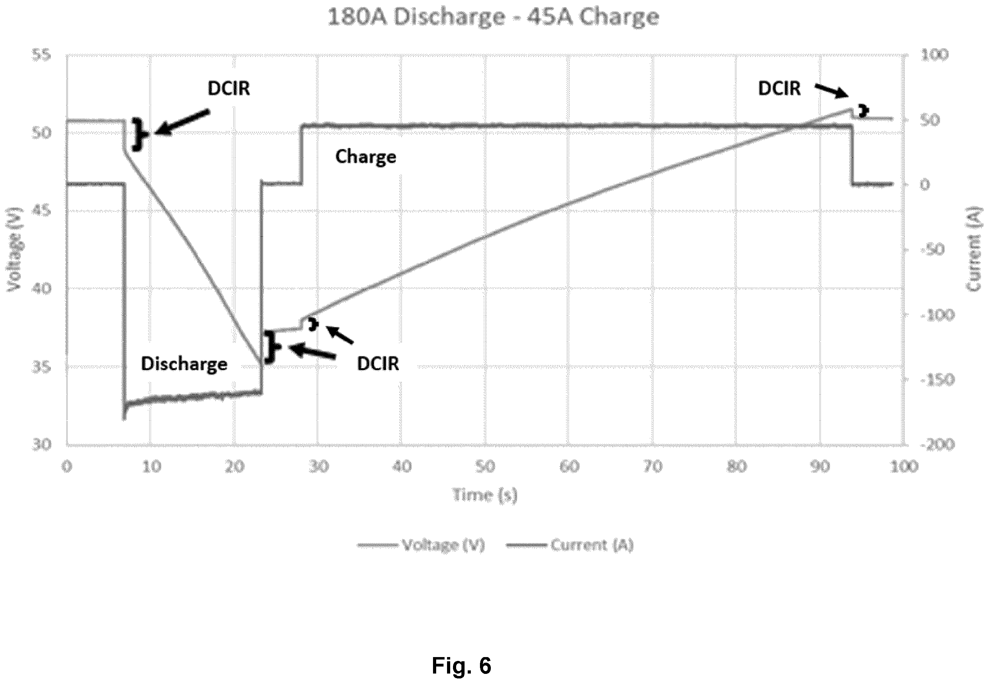

Capacitors such as lithium capacitors and EDL supercapacitors have a measurable DC Internal Resistance (DCIR) that can be tracked. The DCIR may be calculated by measurement of the voltage drop (V2-V1) when going from no-load to full load (I2-I1) according to DCIR = $\Delta V/\Delta I$, where I is the current (Amperes) and V is the Voltage (Volts). An example of a load-based DCIR voltage drop is shown in Fig. 6. As illustrated, the DCIR will cause a voltage drop across the capacitor stack the instant when load is applied. This offset effectively shifts the output voltage curve under load to a lower terminal voltage when current is present - the higher the current, the higher the voltage offset. This offset must be accounted for when considering the proper series capacitor count when compared to the operating voltages for the input to the DC-DC converter 120. The system equivalent DCIR ($DCIR_{eq}$) by scaling DCIR of the individual energy supply element by the number of series and parallel connections in the overall system. This is represented in Equation 2 below.

$$DCIR_{eq} = \frac{DCIR_{single} \cdot S}{P}$$

Equation 2 - equation for calculating the Equivalent System DCIR related to the DCIR of a single storage element scaled for the number of series (S) and parallel (P) energy storage elements.

## 2. Energy Storage Element Control Architecture

Capacitive energy systems such as described herein require active monitoring and balancing of individual capacitor voltages continuously during operation. The system described in US Patent 11,121,415 Monitoring System for Series Connected Battery Cells (incorporated herein by reference) is ideal for this task when battery cells are replaced by capacitors, and may constitute at least part of the energy storage system controller 118 in Fig. 4. Methods described in the patent have the advantage of coulomb counting for determining in situ the present capacitance value of each capacitor in the system at any point during its operational life and thus comparisons over time are facilitated to measure capacitor aging. The method also achieves active cycle counting.

## 3. Bidirectional Power Flow Control Architecture

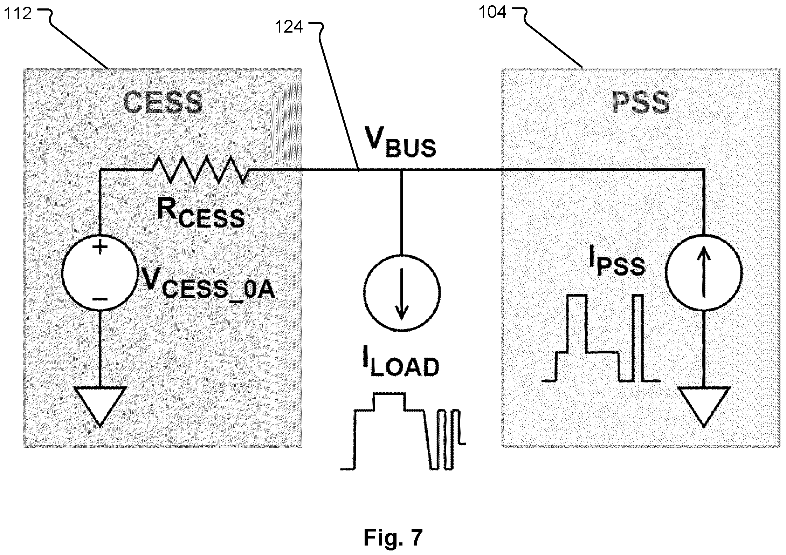

Fig. 7 illustrates a parallel type of storage system with a CESS 112 having a Capacitive Energy Storge Element 116 along with a current source type of power supply system (PSS) 104. Stated another way, the PSS 104 may be configured as a constant current source with current $I_{PSS}$ while the CESS 112 is configured as a voltage source of voltage $V_{CESS\_0A}$ having a resistive drop due to resistance $R_{CESS}$.

The goals of the proposed power flow control architecture are: (1) filtering the dynamic power flow at the PSS side; (2) keeping $V_{BUS}$ at proper level; and (3) keeping the CESS away from the system break point, in other words, avoid a fully charged/discharged condition of CESS (0% < CESS state of charge (SOC) < 100%).

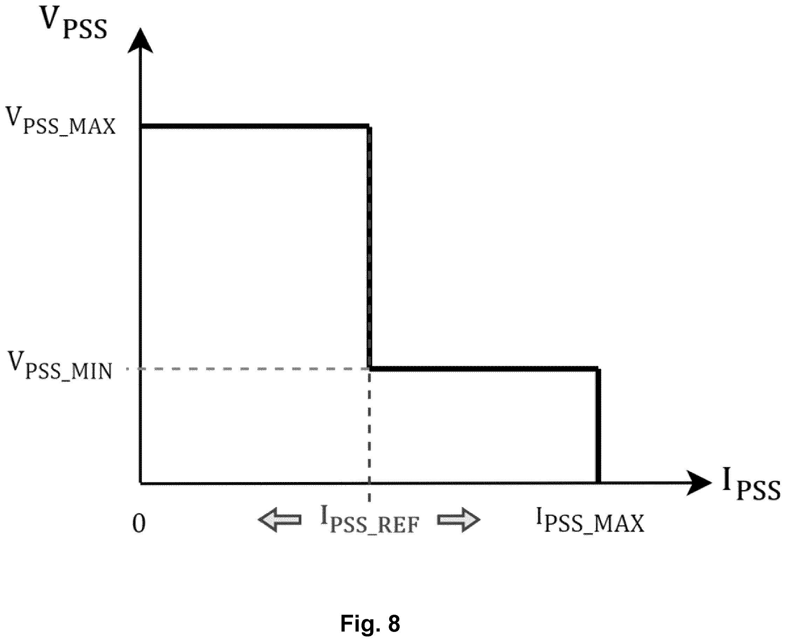

To achieve goal #1 (filtering the dynamic power flow at PSS 104), the output characteristic of the PSS 104 is controlled as current source, as shown in Fig. 8. $V_{PSS\_MAX}$ and $V_{PSS\_MIN}$ represent the maximum and minimum output bus voltage boundary if the PSS 104 is operating at zero load or at maximum load, respectively. $I_{PSS\_MAX}$ is the maximum output current limitation point for PSS 104.

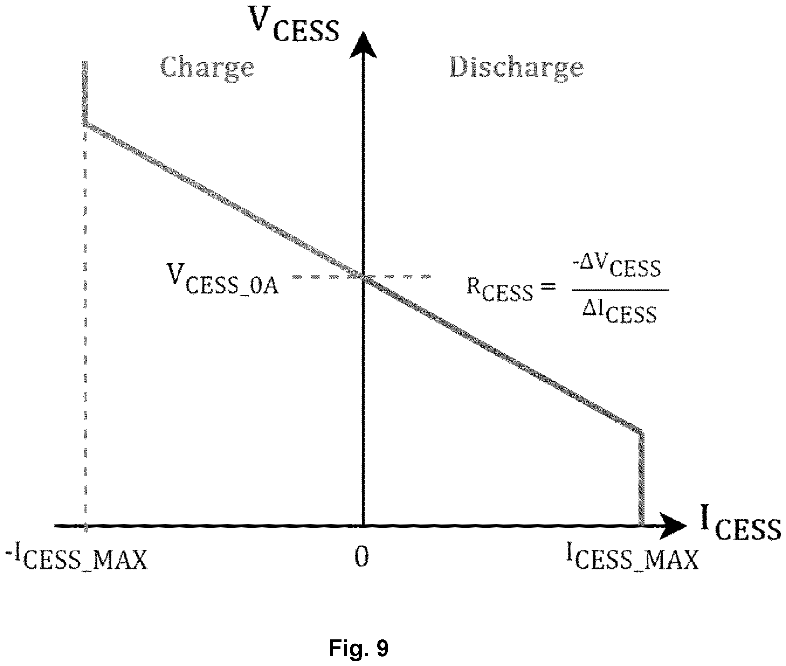

To achieve goal #2 (keeping $V_{BUS}$ at proper level), CESS 112 needs to balance the power of source/load requirement and maintain DC bus 124 voltage. The output characteristic of CESS 112 is controlled as a voltage source with droop function, as shown in Fig. 9. For the output characteristic of CESS 112, there is neither discharge nor charge behavior if bus 124 voltage $V_{BUS}$ (e.g., real-time bus voltage) is equal to the voltage $V_{CESS\_0A}$ of CESS 112 (where $V_{CESS\_0A}$ is the zero-amp voltage set point for the CESS 112 that varies according to system design). However, when $V_{BUS}$ is larger than $V_{CESS\_0A}$, CESS 112 starts to charge, and when $V_{BUS}$ is less than $V_{CESS\_0A}$, CESS 112 starts to discharge. Stated another way, if $V_{BUS} - V_{CESS\_0A}$ is negative, then CESS 112 discharges energy through the Power Converter 120 to DC bus 124, and if $V_{BUS} - V_{CESS\_0A}$ is positive, then Energy Storage Element 116 charges with energy through the Power Converter 120 from DC bus 124. As may be appreciated from Fig. 9, the amount of charge and discharge current depends on the amount of voltage difference between $V_{BUS}$ and $V_{CESS\_0A}$. For example, the amount of charge and discharge current from CESS 112 becomes greater as the difference between $V_{BUS}$ and $V_{CESS\_0A}$ becomes greater.

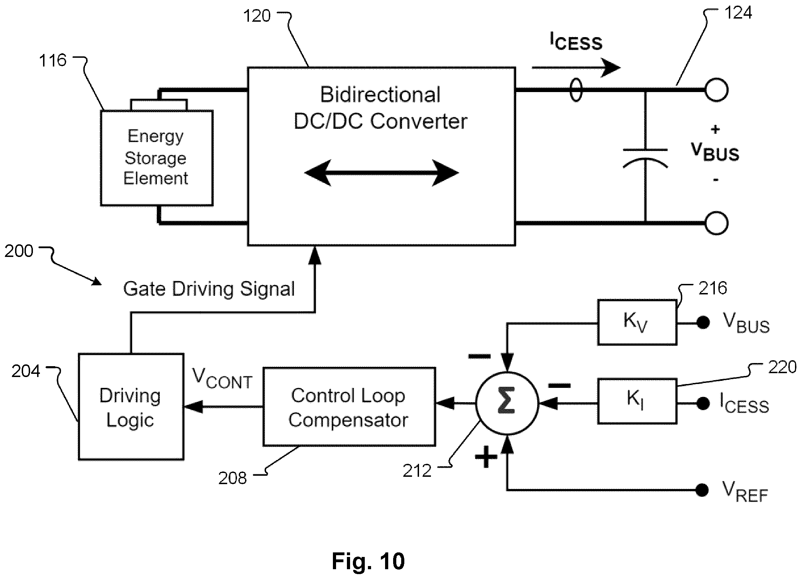

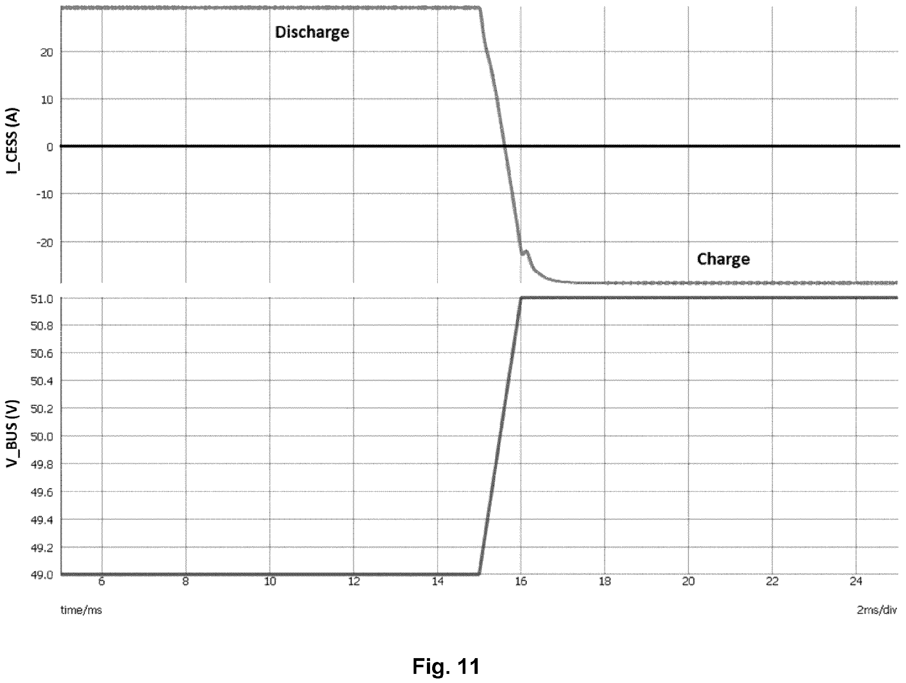

Fig. 10 illustrates a block diagram to achieve the above-described bidirectional charge/discharge behavior. The charge and discharge switch transition is fast and smooth with the control mechanism of Fig. 10, as shown in Fig. 11. In the simulation result, $V_{CESS\_0A}$ is 50V, bus voltage step-up from 49V to 51V within 1ms, and the current flow direction changes from discharge to charge immediately. As shown in Fig. 10, various illustrated elements may be included with or correspond to a control circuit 200. In the illustrated example, the control circuit 200 comprises driving logic 204 for generating a gate driving signal that drives the converter 120 based on a control signal $V_{CONT}$ output by control loop compensator 208, where $V_{CONT}$ is generated based on output of a summation circuit 212. Compensator 208 may comprise circuitry that converts an input signal into an appropriate control signal (e.g., $V_{CONT}$) or other signal appropriate for digestion by a downstream circuit. For example, the compensator 208 may generate $V_{CONT}$ by processing the error amount (or difference) between $V_{REF}$ and ($k_V$*$V_{BUS}$ + $k_I$*$I_{CESS}$). The compensator 208 may be implemented with circuitry (i.e., hardware) or firmware coding. As shown, the summation circuit 212 receives and operates on a reference voltage signal $V_{REF}$ and signals from circuits 216 and 220. As shown, the output of circuit 216 is based on $V_{BUS}$ as measured on bus 124 and the output of circuit 220 is based on $I_{CESS}$ as measured on bus 124. Each circuit 216 and 220 may convert its input $V_{BUS}$ or $I_{CESS}$ into an analog signal according to respective weights K. Equation 3 below shows the relationship between $V_{BUS}$, the K values and $I_{CESS}$.

$$V_{BUS} = \frac{V_{REF}}{K_V} - I_{CESS} \cdot \frac{K_I}{K_V}$$

To achieve goal #3 (keeping CESS 112 away from system break point), the average current that flow in/out of capacitors needs to be zero. There are two examples of methods/circuitry that can accomplish this goal.

Example #1: A PSS 104 output current command ($I_{PSS\_REF}$) that controls the amount of current supplied to bus 124 by PSS 104 can be adjusted based on the loading condition and state of charge of CESS 112 (e.g., real-time SOC), as shown in Equation 4 below, where $I_{CESS\_LPF}$ and $I_{PSS\_LPF}$ are the average values (e.g., real-time values) of the CESS and PSS output currents, respectively, *SOC* represents the state of charge of the Energy Storage Element (e.g., real-time SOC of the Energy Storage Element 116), $SOC_{TG}$ is the regulation target of *SOC* and $K_{SOC}$ is the compensation factor that determines the slew rate of charge and discharge behavior ($SOC_{TG}$ and $K_{SOC}$ are design parameters that may vary according to design and that are selected based on empirical evidence and/or preference). This approach may employ rapid and frequent information transmission between the CESS and PSS to maintain a good dynamic power filtering function.

$$I_{PSS\_REF} = (I_{PCU_{LPF}} + I_{PSS_{LPF}}) + K_{SOC} \cdot (SOC_{TG} - SOC)$$

Equation 4 - Equation of Example #1 for PSS Current Command Calculation

Example #2: A block diagram for implementing example 2 is shown in **Error! Reference source not found.** 12. Here, the CESS implements its own *SOC* regulation function for Energy Storage Element 116. $V_{CAP}$ is the capacitor voltage (e.g., real-time voltage of the Energy Storage Element 116), which can directly indicate the SOC level of the CESS, and $V_{CAP\_REF}$ is the target voltage value of Energy Storage Element 116 for SOC regulation. When $V_{CAP}$ is larger than $V_{CAP\_REF}$, CESS 112 increases its output setpoint to indicate an intent to and eventually release energy (i.e., discharge) to bus 124. When $V_{CAP}$ is less than $V_{CAP\_REF}$, CESS decreases its output setpoint to indicate an intent to and eventually absorb energy (i.e., charge) from the DC bus 124. The PSU monitors bus voltage ($V_{BUS}$) to determine whether to increase or decrease the current command ($I_{PSS\_REF}$). When $V_{BUS}$ is larger than $V_{BUS\_REF}$ (which may be the stated operating voltage of the load) the PSU decreases the output current command. When $V_{BUS}$ is less than $V_{BUS\_REF}$, the PSU increases the output current command.

The above-described functionality for example 2 is carried out by control circuits 300 and 304. As shown, control circuit 300 includes driving logic 308 for driving the rectifier of the PSU stage 104, compensator 312, and summation circuit 316 that receives and operates on the illustrated current values $I_{PSS\_REF}$, $I_{PSSS}$, and $\Delta I_{PSS\_REF}$, where $\Delta I_{PSS\_REF}$ is output from a compensator 324 whose input is from summation circuit 320 that determines a difference between $V_{BUS\_REF}$ and $V_{BUS}$. Meanwhile, control circuit 304 includes driving logic 328 for driving the converter 120 of the CESS stage 112, compensator 332, and summation circuit 336 that receives and operates on the illustrated voltage values $V_{CESS\_0A}$, $\Delta V_{CESS\_0A}$, and output of feedback block 348 that outputs a signal based on $V_{BUS}$ and $I_{CESS}$, where $\Delta V_{CESS\_0A}$ is output from compensator 344 whose input is from summation circuit 340 that determines a difference between $V_{CAP}$ and $V_{CAP\_REF}$. As may be appreciated, the illustrated compensators serve the same or similar function(s) as described with reference to the compensator 208 of Fig. 10.

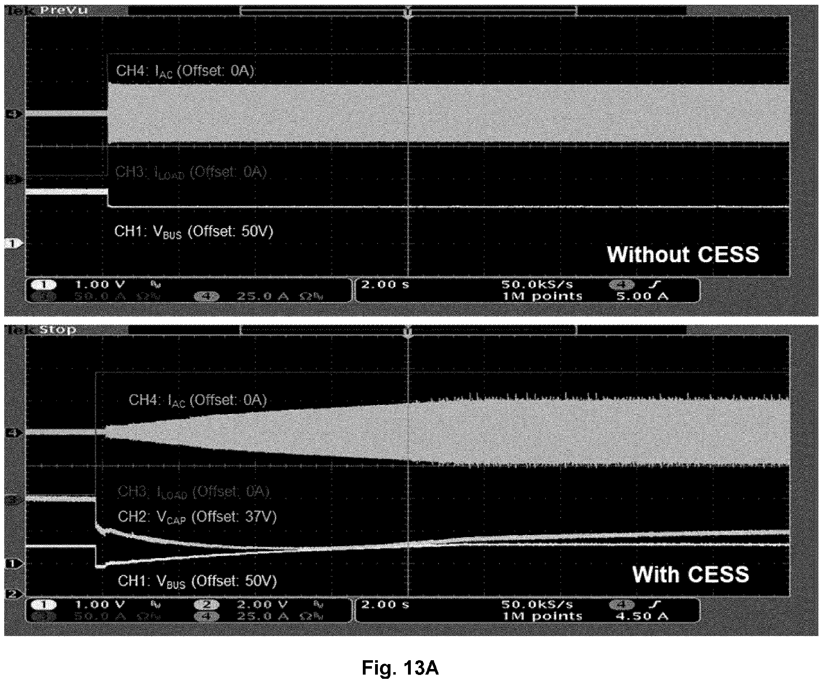

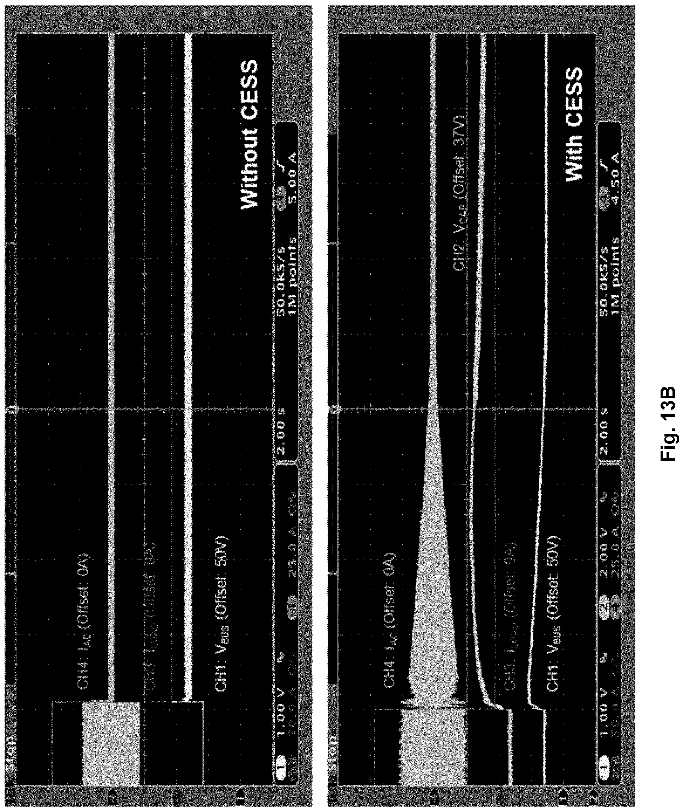

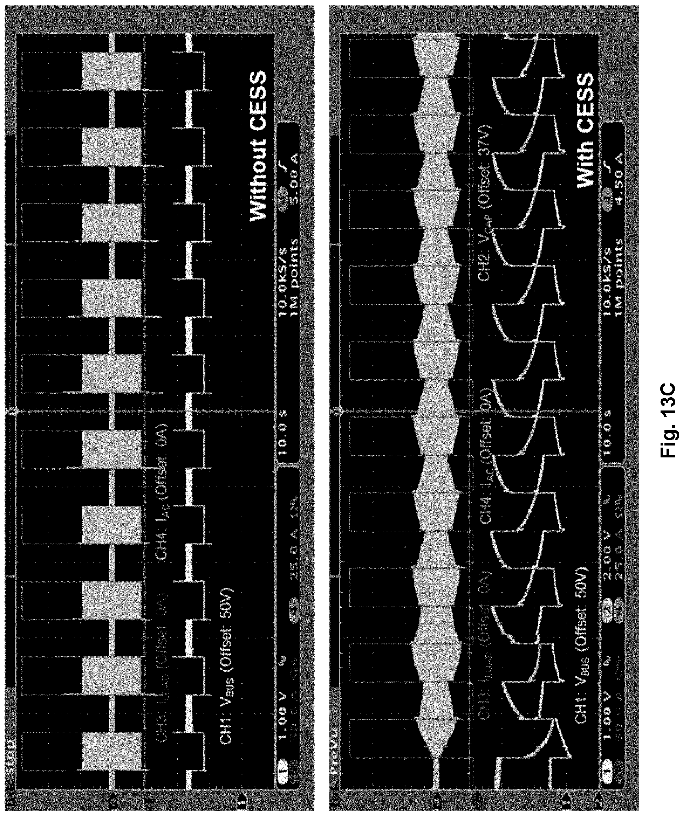

**Error! Reference source not found.** Figs. 13A-13C are waveform comparisons of a power system with and without a CESS power stage, where the systems implement the control method example #1 above. In more detail, Fig. 13A is a comparison between systems during load step-up, Fig. 13B is a comparison between systems during a load step-down, and Fig. 13C is a comparison between systems for a periodic pulse load (or continuous, repetitive step load) condition. Channel 1 (yellow) is bus voltage ($V_{BUS}$), channel 2 (blue) is capacitor voltage ($V_{CAP}$), channel 3 (purple) is load current ($I_{LOAD}$), and channel 4 is AC current ($I_{AC}$). As may be appreciated from the figures, the change in slew rate of $I_{AC}$ can be greatly mitigated by the power system with CESS at the load transient moment for all the load patterns, which decreases the AC current harmonics. In the illustrated examples, the bus voltage is kept around 50V within proper range.

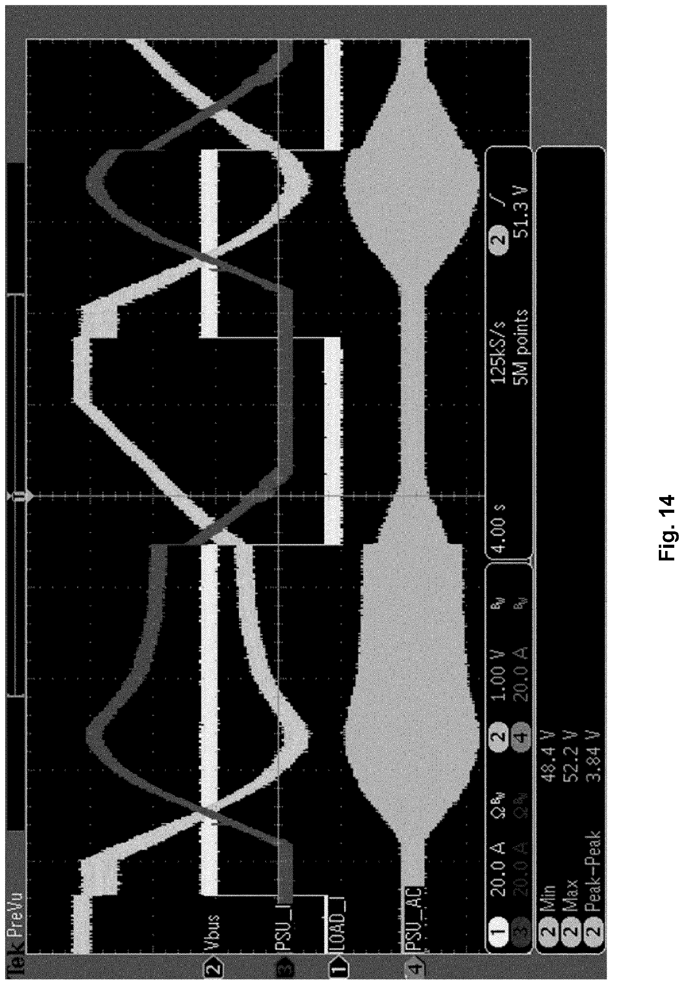

Fig. 14 illustrates waveforms for a CESS stage and PSU stage during load step-up and load step-down conditions, where the system implements the control method example #2 above. Channel 1 (yellow) is load current ($I_{LOAD}$), channel 2 (blue) is bus voltage ($V_{BUS}$), channel 3 (purple) is PSU current ($I_{PSU}$), and channel 4 is AC current ($I_{AC}$). As may be appreciated from Fig. 14, the change in slew rate of $I_{AC}$ is greatly mitigated by CESS at the load transient moment, which decreases the AC current harmonics.

In view of the foregoing, it should be appreciated that systems and methods according to example embodiments provide at least the following advantages: Symmetrical charge and discharge capability; high power density; able to achieve extremely high cycle counts; faster charge and discharge rates than other technology; high flexibility; high scalability; fast and smooth transition between charge and discharge behavior; high robustness and stability for DC bus voltage regulation; inherent smoothing of utility input current transients; and high robustness power flow management that avoids CESS break points.

Elements of systems described herein include a PSS (Power Supply System) as a current source, a CESS (Capacitive Energy Storage System) as a voltage source with droop, a CESS which includes series and parallel connected Lithium or EDL supercapacitors or a combination of an array of series and parallel connected capacitors combined with a plurality of series and parallel connected batteries. Example embodiments further provide a control algorithm for a CESS, coordinated with the control mechanism of the PSS to achieve reduction of PSS output power change slew rate, reduction of power line harmonics in the utility input line current, and rapid and smooth bidirectional power flow of the combined power system. Example embodiments also provide a bidirectional power flow control architecture that illustrates the output characteristics of the PSS and CESS and their interactions, a control algorithm for bidirectional DC-DC converter of CESS to achieve instantaneous power flow direction change, a control mechanism to regulate the current of the PSS by calculating the real-time output current of both the CESS and PSS, along with the real-time SOC value of the CESS, a control algorithm for the CESS to regulate its capacitor's SOC or voltage by adjusting its output offset point, and a control mechanism to regulate the current of the PSS by monitoring system bus voltage without exchanging information between PSS and CESS.

In view of the above, it should be appreciated that example embodiments are directed to a power system 100 comprising an energy storage system 112 including a rechargeable energy storage element 116 and a converter 120 connected to the rechargeable energy storage element and configured to connect to a bus 124 so that the energy storage system is connected in parallel with a load 128 and a main power supply system 104. In some examples, the energy storage system cooperates with the main power supply system to supply power to the load. The energy storage system may comprise a control circuit (e.g., 118, 200, and/or 304) configured to monitor a voltage of the bus (e.g., $V_{BUS}$) and control the converter to either charge or discharge the rechargeable energy storage element based on the voltage of the bus.

In some examples, the energy storage system and the main power supply system supply power to the load such that the rechargeable energy storage element manages the voltage of the bus by charging when the voltage of the bus is below a control threshold and discharging when the voltage of the bus is above the control threshold. In some examples, the energy storage system cooperates with the main power supply system by stabilizing an AC source input (e.g., utility 106) of the main power supply system. As may be appreciated from Fig. 9, a magnitude of current flowing from the bus used to charge the rechargeable energy storage element and a magnitude of current flowing to the bus by being discharged from the rechargeable energy storage element varies according to the voltage of the bus. In at least one embodiment, the magnitude of current used to charge the rechargeable energy storage element and the magnitude of current used to discharge the rechargeable energy storage element varies according to a difference between the voltage of the bus and a zero-current setpoint voltage of the converter. For example, the magnitude of current used to charge and the magnitude of current used to discharge becomes greater as the difference between the voltage of the bus and the zero-current setpoint voltage of the converter becomes greater.

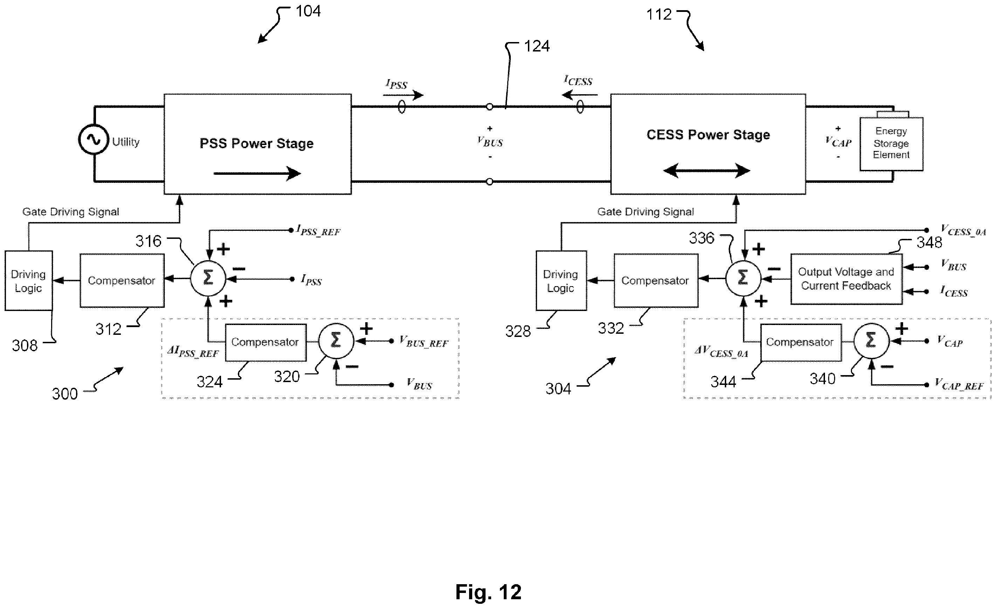

As may be appreciated from Fig. 12, a state of charge (SOC) of the rechargeable energy storage element is controlled to avoid overcharging and over-discharging.

In some examples, the system 100 further comprises the main power supply system; and an additional control circuit (e.g., 300) configured to regulate output current of the main power supply system based on a real-time current monitoring of the main power supply system, a real-time current measurement of the converter, and a SOC of the rechargeable energy storage element.

As described herein, the rechargeable energy storage element may comprise a plurality of electrically connected capacitors. The plurality of capacitors may comprise lithium capacitors or Electric Double Layer Capacitors. In at least one example, the rechargeable energy storage element comprises a plurality of electrically connected capacitors connected in parallel with a plurality of electrically connected batteries.

As may be appreciated from Fig. 9, the control circuit, in some examples, is configured to control the converter to charge the rechargeable energy storage element when the voltage of the bus is greater than a zero-current setpoint voltage of the converter (e.g., $V_{CESS\_0A}$). In some examples, the control circuit is configured to control the converter to discharge the rechargeable energy storage system when the voltage of the bus is less than the zero-current setpoint voltage of the converter. As shown in Fig. 10, in at least one embodiment, the control circuit comprises a summation circuit (e.g., 212) configured to subtract a first value that is based on the voltage of the bus and a second value that is based on a current (e.g., $I_{CESS\_0A}$) provided by the converter from a reference value (e.g., $V_{REF}$), which may be a reference voltage. As also shown in Fig. 10, the control circuit may comprise gate driving logic (e.g., 204) configured to drive the converter based on output of a compensator that receives output of the summation circuit. With reference to Fig. 12, in some examples, the control circuit is further configured to monitor a voltage of the rechargeable energy storage element, control a setpoint of the converter (e.g., $V_{CESS\_0A}$) to increase when the voltage of the rechargeable energy storage element is greater than a reference value so that the rechargeable energy storage element is allowed to release energy to the bus, and control the setpoint of the converter to decrease when the voltage of the rechargeable energy storage element is less than the reference value so that the rechargeable energy storage system is allowed to absorb energy from the bus.

As noted above, the system may further comprise the main power supply system and an additional control circuit (e.g., 300) configured to regulate output current (e.g., $I_{PSS}$) of the main power supply system based on the voltage of the bus, a reference voltage of the bus (e.g., $V_{BUS\_REF}$), and a real-time current (e.g., $I_{PSS}$) of the main power supply system.

In view of the description and figures, at least one example embodiment is directed to a power system 100, comprising a bus 124, a main power supply system 104 connected to the bus and configured as a current source. The power system 100 may include a rechargeable energy storage system 112 connected to the bus and configured as a voltage source with a droop function, with the rechargeable energy storage system including a rechargeable energy storage element 116 and a converter 120 connected between the rechargeable energy storage element and the bus. The system may further comprise a control circuit (e.g., 118, 200, and/or 304) configured to monitor a voltage of the bus and control the converter to either charge or discharge the rechargeable energy storage element based on the voltage of the bus and a zero-current setpoint voltage (e.g., $V_{CESS\_0A}$) of the converter.

In view of the description and figures, at least one example embodiment is directed to a power system 100 comprising a bus 124 configured to connect to a load and a main power supply system 104 and a rechargeable energy storage system 112 connected to the bus and configured as a voltage source with a droop function. The power system may include a control circuit (e.g., 118, 200, and/or 304) configured to monitor a voltage of the bus and control the rechargeable energy storage system to either charge or discharge to or from the bus based on the voltage of the bus and a zero-current setpoint voltage of the rechargeable energy storage system.

Here, it should be appreciated that one or more of the above-described elements may be included on a semiconductor chip as a system-on-chip (SoC). Each chip (or die) may include a semiconductor substrate, such as silicon, having electronic components mounted on and/or formed therein. Such a chip may include electronic memory while the other chip in the chip stack may include processing/control circuitry for controlling the electronic memory. The electronic memory may be a computer readable medium including instructions that are executable by the processor. The memory may include any type of computer memory device, and may be volatile or non-volatile in nature. In some embodiments, the memory may include a plurality of different memory devices. Non-limiting examples of memory include Random Access Memory (RAM), Read Only Memory (ROM), flash memory, Electronically-Erasable Programmable ROM (EEPROM), Dynamic RAM (DRAM), etc. The memory may include instructions that enable the processor to control various functions and to store data. The memory may be local (e.g., integrated with) the processor and/or separate from the processor. The processor may correspond to one or many computer processing devices. For instance, the processor may be provided as a Field Programmable Gate Array (FPGA), an Application-Specific Integrated Circuit (ASIC), any other type of Integrated Circuit (IC) chip, a collection of IC chips, a microcontroller, a collection of microcontrollers, or the like. As a more specific example, the processor may be provided as a microprocessor, Central Processing Unit (CPU), or plurality of microprocessors that are configured to execute the instructions sets stored in memory. The processor may perform read and/or write operations for the memory and/or enable various functions upon executing the instructions stored in memory.

It should be further appreciated that elements describe herein may include one or more communication interfaces that enable communication with other elements in the system. These communication interfaces include wired and/or wireless communication interfaces for exchanging data and control signals between one another. Examples of wired communication interfaces/connections include Ethernet connections, HDMI connections, connections that adhere to PCI/PCIe standards and SATA standards, and/or the like. Examples of wireless interfaces/connections include Wi-Fi connections, LTE connections, Bluetooth connections, NFC connections, and/or the like.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

Aspects of the present disclosure may take the form of an embodiment that is entirely hardware, an embodiment that is entirely software (including firmware, resident software, microcode, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

The terms "determine," "calculate," "compute," and variations thereof, as used herein, are used interchangeably and include any type of methodology, process, mathematical operation or technique.

Any one or more of the aspects/embodiments as substantially disclosed herein.

Any one or more of the aspects/embodiments as substantially disclosed herein optionally in combination with any one or more other aspects/embodiments as substantially disclosed herein.

One or more means adapted to perform any one or more of the above aspects/embodiments as substantially disclosed herein.

**Claims**

1. A power system, comprising:

    an energy storage system including:

        a rechargeable energy storage element; and
        a converter connected to the rechargeable energy storage element and configured to connect to a bus so that the energy storage system is connected in parallel with a load and a main power supply system, the energy storage system cooperating with the main power supply system to supply power to the load; and

    a control circuit configured to:

        monitor a voltage of the bus; and
        control the converter to either charge or discharge the rechargeable energy storage element based on the voltage of the bus.

2. The power system of claim 1, wherein the energy storage system and the main power supply system supply power to the load such that the rechargeable energy storage element manages the voltage of the bus by charging when the voltage of the bus is below a control threshold and discharging when the voltage of the bus is above the control threshold.

3. The power system of claim 1, where the energy storage system cooperates with the main power supply system by stabilizing an AC source input of the main power supply system.

4. The power system of claim 1, wherein a magnitude of current flowing from the bus used to charge the rechargeable energy storage element and a magnitude of current flowing to the bus by being discharged from the rechargeable energy storage element varies according to the voltage of the bus.

5. The power system of claim 4, wherein the magnitude of current used to charge the rechargeable energy storage element and the magnitude of current used to discharge the rechargeable energy storage element varies according to a difference between the voltage of the bus and a zero-current setpoint voltage of the converter.

**6.** The power system of claim 5, wherein the magnitude of current used to charge and the magnitude of current used to discharge becomes greater as the difference between the voltage of the bus and the zero-current setpoint voltage of the converter becomes greater.

**7.** The power system of claim 1, wherein a state of charge (SOC) of the rechargeable Energy Storage Element is controlled to avoid overcharging and over-discharging.

**8.** The power system of claim 1, further comprising:

the main power supply system; and
an additional control circuit configured to regulate output current of the main power supply system based on a real-time current monitoring of the main power supply system, a real-time current measurement of the converter, and a SOC of the rechargeable energy storage element.

**9.** The power system of claim 1, wherein the rechargeable energy storage element comprises a plurality of electrically connected capacitors.

**10.** The power system of claim 9, wherein the plurality of capacitors comprise lithium capacitors or Electric Double Layer Capacitors.

**11.** The power system of claim 1, wherein the rechargeable energy storage element comprises a plurality of electrically connected capacitors connected in parallel with a plurality of electrically connected batteries.

**12.** The power system of claim 1, wherein the control circuit is configured to control the converter to charge the rechargeable energy storage element when the voltage of the bus is greater than a zero-current setpoint voltage of the converter.

**13.** The power system of claim 12 wherein the control circuit is configured to control the converter to discharge the rechargeable energy storage system when the voltage of the bus is less than the zero-current setpoint voltage of the converter.

**14.** The power system of claim 1, wherein the control circuit comprises a summation circuit configured to:
subtract a first value that is based on the voltage of the bus and a second value that is based on a current provided by the converter from a reference value.

**15.** The power system of claim 14, wherein the reference value is a reference voltage.

**16.** The power system of claim 14, wherein the control circuit comprises gate driving logic configured to drive the converter based on output of a compensator whose input is based on output of the summation circuit.

**17.** The power system of claim 14, wherein the control circuit is further configured to:

monitor a voltage of the rechargeable energy storage element;
control a setpoint of the converter to increase when the voltage of the rechargeable energy storage element is greater than a reference value so that the rechargeable energy storage element is allowed to release energy to the bus; and
control the setpoint of the converter to decrease when the voltage of the rechargeable energy storage element is less than the reference value so that the rechargeable energy storage system is allowed to absorb energy from the bus.

**18.** The power system of claim 1, further comprising:

the main power supply system; and
an additional control circuit configured to regulate output current of the main power supply system based on the voltage of the bus, a reference voltage of the bus, and a real-time current of the main power supply system.

**19.** A power system, comprising:

a bus;

a main power supply system connected to the bus and configured as a current source;

a rechargeable energy storage system connected to the bus and configured as a voltage source with a droop function, the rechargeable energy storage system including a rechargeable energy storage element and a converter connected between the rechargeable energy storage element and the bus; and

a control circuit configured to:

monitor a voltage of the bus; and

control the converter to either charge or discharge the rechargeable energy storage element based on the voltage of the bus and a zero-current setpoint voltage of the converter.

20. A power system, comprising:

a bus configured to connect to a load and a main power supply system;

a rechargeable energy storage system connected to the bus and configured as a voltage source with a droop function; and

a control circuit configured to:

monitor a voltage of the bus; and

control the rechargeable energy storage system to either charge or discharge to or from the bus based on the voltage of the bus and a zero-current setpoint voltage of the rechargeable energy storage system.

**Fig. 1**
**Related Art**

EP 4 513 703 A1

**Fig. 2**

EP 4 513 703 A1

**Fig. 3**

EP 4 513 703 A1

**Fig. 4**

**Fig. 5**

Fig. 6

Fig. 7

Fig. 8

**Fig. 9**

EP 4 513 703 A1

**Fig. 10**

EP 4 513 703 A1

Fig. 11

**Fig. 12**

EP 4 513 703 A1

Fig. 13A

**Fig. 13B**

Fig. 13C

Fig. 14

## EUROPEAN SEARCH REPORT

**Application Number**

EP 24 19 6239

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/084081 A1 (KNOBLOCH ANDREAS [DE]) 16 March 2023 (2023-03-16) | 1-9, 11-20 | INV. H02J3/32 |
| Y | * paragraphs [0002] - [0046], [0070] - [0105], [0122]; figures 1/9-9/9 * | 10 | H02J9/06 H02J1/10 |
| Y | US 2013/285459 A1 (JAOUI YOUNES [BE] ET AL) 31 October 2013 (2013-10-31) * paragraphs [0009], [0010]; figures 1-8 * | 10 | |
| A | US 2022/399722 A1 (DENNIS KEVIN [US] ET AL) 15 December 2022 (2022-12-15) * paragraphs [0002] - [0011], [0039] - [0041]; figures 1,2 * | 1-20 | |
| A | US 6 657 321 B2 (GEN ELECTRIC [US]) 2 December 2003 (2003-12-02) * columns 1,3; figures 1,2 * | 1-20 | |
| A | US 2016/006242 A1 (YAMADA RYUJI [JP] ET AL) 7 January 2016 (2016-01-07) * paragraphs [0003] - [0026]; figures 1,2 * | 1-20 | TECHNICAL FIELDS SEARCHED (IPC)<br><br>H02J |

The present search report has been drawn up for all claims

| Place of search | Date of completion of the search | Examiner |
|---|---|---|
| Munich | 19 December 2024 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6239

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | Publication date | Patent family member(s) | Publication date |
|---|---|---|---|
| US 2023084081 A1 | 16-03-2023 | DE 102020113871 A1<br>EP 4154371 A1<br>US 2023084081 A1<br>WO 2021239616 A1 | 25-11-2021<br>29-03-2023<br>16-03-2023<br>02-12-2021 |
| US 2013285459 A1 | 31-10-2013 | EP 2658070 A2<br>FR 2990082 A1<br>US 2013285459 A1 | 30-10-2013<br>01-11-2013<br>31-10-2013 |
| US 2022399722 A1 | 15-12-2022 | NONE | |
| US 6657321 B2 | 02-12-2003 | NONE | |
| US 2016006242 A1 | 07-01-2016 | CN 105027404 A<br>EP 2955828 A1<br>EP 3176897 A1<br>JP 6123896 B2<br>JP WO2015015570 A1<br>US 2016006242 A1<br>WO 2015015570 A1 | 04-11-2015<br>16-12-2015<br>07-06-2017<br>10-05-2017<br>02-03-2017<br>07-01-2016<br>05-02-2015 |

EPO FORM P0459

For more details about this annex : see Official Journal of the European Patent Office, No. 12/82

**REFERENCES CITED IN THE DESCRIPTION**

**Patent documents cited in the description**

- US 63534728
- US 63562137